# EUROPEAN PATENT SPECIFICATION

(11) **EP 2 027 038 B1**
(45) Date of publication and mention of the grant of the patent: **16.03.2011**
(21) Application number: 07788738.8
(22) Date of filing: 12.06.2007
(51) Int. Cl.: B65D 65/40, B65D 75/26, B65D 33/01, B65D 81/34, B31B 1/64, B32B 27/08, B32B 1/08

(54) **LAP-SEAL STRUCTURE**
ÜBERLAPPENDE ABDICHTUNGSSTRUKTUR
STRUCTURE DE SCELLEMENT CHEVAUCHANT

(30) Priority: 13.06.2006 FI 20060586
(43) Date of publication of application: 25.02.2009
(73) Proprietor: Suominen Flexible Packaging Ltd., 33730 Tampere (FI)
(72) Inventor: KOIVU, Heli, 28660 Pori (FI); SIRÉN, Kari, 15880 Hollola (FI); PIETILÄ, Ari-Pekka, 33730 Tampere (FI)
(74) Representative: Matilainen, Mirja Helena
(86) International application number: PCT/FI2007/050346
(87) International publication number: WO 2007/144468

(56) References cited:
- EP-A1- 0 890 521
- WO-A-98/22282
- JP-A- 08 133 300
- US-A- 5 387 453
- US-B1- 6 333 061

## Description

The invention concerns a lap-seal structure for joining film-like laminate elements. The invention also concerns a package comprising the lap-seal structure. The invention also concerns a pre-fabricated package in the form of a tube including the lap-seal structure.

In laminates for e.g. food packages the inner layer of the package is often made of e.g. polyethylene (PE) and the outer layer of polypropylene (PP). When forming a package in the form of a plastic bag of laminates the outer surfaces of which are not heat fusible relative to each other, e.g. in a polypropylene/polyethylene (PP/PE) laminate, one common solution is first to fin-seal two opposite edges of a laminate web together using heat and then to flatten and fuse the two remaining edges together with heat.

A lap-seal would be a more attractive solution e.g. in terms of appearance of the package. In case of surfaces, which are not heat-fusible with each other, glue is needed for lap-sealing of the laminate ends. However, if the package is used for packaging food products, strict regulations are limiting the type of glues that can be used. One recent solution to lap-seal surfaces not heat-fusible with each other, has been to provide a modified OPP/PE laminate where the oriented polypropylene (OPP) surface is covered with an additional thin layer, the main part of which is polyethylene (PE) (Bicor MB440 by Exxon), whereby the outer surfaces become heat fusible relative to each other while the properties of a PP/PE laminate are maintained. This kind of laminate allows lap-sealing of the outer surfaces together, but is a special product and quite expensive.

Packages made of PP/PE-laminates are also used in food packages, which can be heated in a microwave oven. When a food product that has been sealed in a package is heated in a microwave oven, vapour is generated from the product in association with the heating. As a result, the gas pressure inside the package is increased. If the package includes a laminate film acting e.g. as a heat-sealed cover of a food container or as sealed wrapping device of the food product, the gas pressure may cause bursting of the laminate film. One solution to avoid this is merely to cut holes into the laminate part of the package before cooking. However, in order to be able to utilise the possibility of pressure-cooking of the sealed package, the pressure discharge should be effected in a more controlled way than by merely cutting holes in the laminate or detaching the laminate at least partly from the container, as is often done in the state of the art.

One solution to this is to provide a package with a separate valve for pressure discharge. Another solution is provided in EP 0 661 219 B1, which describes a package comprising a longitudinal seam and sealed ends. During heating the pressure is released through a longitudinal channel to the openings in the end seals, formed as a result of heating and connected to the space surrounding the package.

### Summary of the invention

In the present invention a lap-seal structure for joining laminate elements of resinous material is provided, wherein the lap-seal structure comprises
a first laminate element comprising a first layer and a second layer laminated thereon so that at one edge of the first laminate element, the second layer and the lamination of the second layer extend to a distance from the edge of the first layer whereby a border area of the first layer is formed in the direction of the edge,
a second laminate element comprising a first layer and a second layer laminated thereon, wherein the outer surface of the first layer of the second laminate element is heat fusible with the inner surface of the first layer of the first laminate element,
the outer surface of the first layer of one end of the second laminate element is overlapping the inner surface of the first layer of the first laminate element at the said border area of the first laminate over a distance,
a bonded area formed by heat-sealing the facing surfaces longitudinally at the overlapping area over a distance in the transverse direction to the longitudinal direction, to form a lap-seal, wherein at the bonded area heat sealable lacquer is applied over an area along the longitudinal direction of the bonded area and the lacquer extends beyond the bonded area in the width direction.

In one embodiment of the invention the first and the second laminate elements are on the opposite ends or sides of one continuous piece of laminate. When the lap-seal structure according to the invention is formed of such laminate, a pre-fabricated package, i.e. a pre-package, in the form of a tube including the lap-seal structure is formed.

The invention also concerns a package containing the lap-seal structure according to the invention.

The invention allows use of laminates made of ordinary materials in a lap-seal. In addition, a thinner lap-seal is provided. A further advantage is that no cross sections of the laminate are exposed to the inner side of the package, whereby in case of a food product, there are less limitations for the type of glue used as lamination glue between the first and second layers of the first and second laminates. The lap-seal structures containing glue in the lap-seal or breathable material in the border area provide a simple structure for pressure release from a package into which pressure has been generated e.g. as a result of heating the contents of the package.

### Brief description of the drawings

Figure 1 shows a schematic view of a lap-seal structure from above,
Figure 2 shows schematically a cross-section along line A-A of the lap-seal structure of Figure 1,
Figure 3 shows a package including the lap-seal structure according to the invention and
Figure 4A shows schematically before sealing a lap-seal structure according to the invention containing heat-sealable lacquer and Figure 4B the same in a tube form.

### Detailed description of the invention

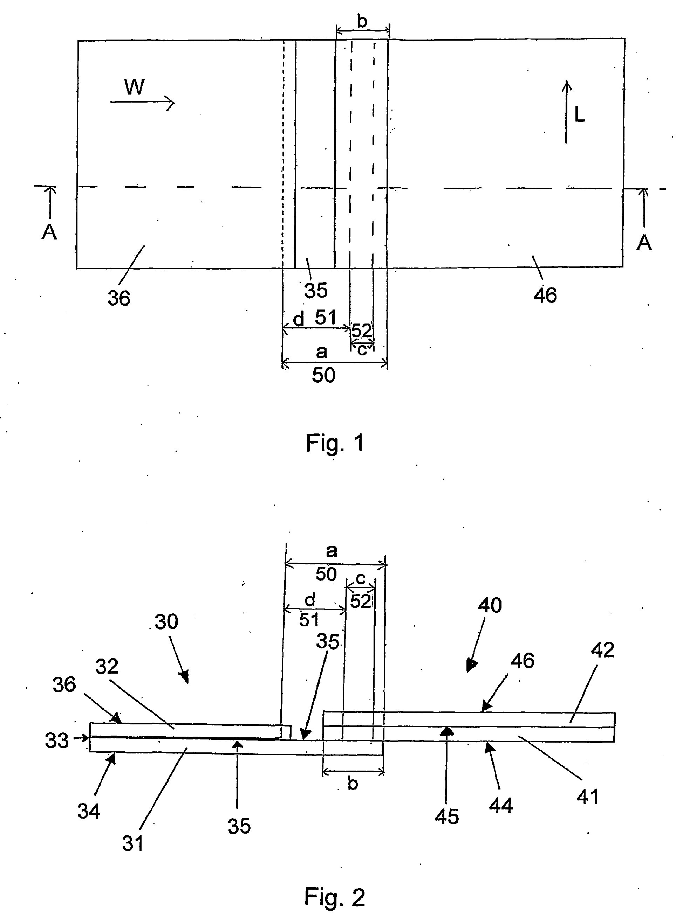

In the present invention a lap-seal structure for joining laminate film elements of resinous material is provided. Figure 1 presents schematically a structure of a lap-seal and Fig. 2 a cross-section of the structure of Fig. 1.

The first laminate element (30) comprises a film of e.g. low-density polyethylene (LDPE) as a first layer (31) and a film of e.g. bi-axially oriented polypropylene (BOPP) laminated thereon as a second layer (32). The second laminate element (40) also comprises a low density polyethylene (LDPE) as a first layer (41) and a film of bi-axially oriented polypropylene (BOPP) laminated thereon as a second layer (42). In both laminate elements (30, 40), the surface of the first layer (31, 41) facing the second layer (32, 42), is called inner surface of the first layer (35, 45) and the opposite surfaces of the first layers (31, 41) are called outer surfaces of the first layers (34, 44). The laminated area of the first laminate element is marked with reference number (33).

In one end of the first laminate the first layer (31) extends further than the second layer (32). The second layer of the first laminate is laminated onto first layer of the same so that a longitudinal, non-laminated area or part (50) of the first layer is provided along the edge of the laminate. Hence, along the edge, a border area (50) is formed over a distance (a) starting from the edge of the first laminate element.

The outer surface of the polyethylene layer (44) (first layer) of one end of the second laminate element (40) is lapped over the inner surface of the first layer (polyethylene) of the first laminate element at the said border area (50) of the first laminate over a distance (b). The second laminate element end may be overlapping partly the border area (50), wholly, or even extend past it. After this, the overlapping area is sealed with heat so that a continuous seal along the direction of the laminate edges is formed. This bonded area (52) is covering in the transverse direction of the longitudinal seal at least part (c) of the overlapping area (b). Thus a lap-seal is formed. If the end of the second laminate element is overlapping wholly the border area (50), a lap-seal with bonded area (52) extending to the border of the laminated area of the first laminate element may be formed. If the bonded area does not extend to the point where the lamination of the first and second layers of the first laminate element start, a longitudinal intermediate area of width (d) in the transverse direction to the laminate edges is formed.

The first and second layers of the first and second laminate elements may be formed of several layers. Preferably the said first layer of the laminates, at least of the first laminate element, is formed of one layer each. In one embodiment also the said second layers of the laminates are formed of one layer each. The materials of the said first and second layers of the first and second laminate elements may be of any resinous material, as long as the outer surface of the first layer of the second laminate element is heat-fusible with the upper surface of the first layer of the first laminate element. The first layer of the first and/or second laminate element may be of e.g. polyethylene (PE) or oriented or non-oriented polypropylene (PP), and the second layer of the first and/or second laminate element may be of e.g. oriented or non-oriented polypropylene (PP) or polyethyleneterephtalate (PET) or polyamide (PA). Preferably the said first layers of the first and second laminate elements are of same material, preferably also of same thickness. Preferably the said second layers of the first and second laminate elements are of the same material, preferably also of same thickness.

In one embodiment of the invention the first layers of the laminate elements are of the same material and the second layers of the laminate elements are of the same material.

Possibly the first layer of at least of the first laminate element is a breathing material.

The second laminate element may be lapping partly or wholly the first laminate margin formed by the first layer. That is, the edge of the end of the second laminate element may be at a distance from the point where the margin begins, extend to that point or even further over the second layer of the first laminate element. Heat-sealing of the second laminate element to the margin of the first laminate is effected so that a continuous seal in the direction of the ends of the laminate elements, i.e. in the longitudinal direction (L), is formed. In the width direction (W) of the margin the seal may extend over the whole or part of the over-lapping area of the margin and the second laminate element.

The invention provides lap-seal structures for packages, through which structures, when heated, pressure may be discharged from the inside of the package. In one such embodiment of the lap-seal structure according to the invention, a heat sealable lacquer is applied to one or more preselected area(s) of the margin to be heat-sealed, e.g. at discrete areas of the margin, e.g. at regular distances from each other. The adhesion force between the lacquer and the margin and the first layer of the second laminate element is such, that in the heating conditions, e.g. in a microwave oven, the lacquer used softens thus allowing the seal to be opened as a result of heat and pressure generated inside the package whereas the lacquer-free part of the seal does not open up. Suitable lacquers are heat-sealable lacquers, which begin to soften at a temperature range of 50 to 120 °C, preferably 70 to 100 °C.

In a lap-seal structure, suitable for pressure release from the inside of a package when heated, a breathable material is used as the first layer of the first laminate element and the second layer of the first laminate element comprises a resinous layer which does not substantially stretch and break up when heated, e.g. oriented polymer. By breathable material is meant a film, which comprises inorganic filler material mixed with resinous material in an amount so that in the so formed film open channels from the inside of the package to the space around the package may be formed when the package is heated and pressure is generated inside the package. In this case the second laminate element is directly fused with heat to the upper side of the margin of the first laminate element, so that in the longitudinal direction of the margin, next to the point where the second laminate element is laminated to the first laminate element, a longitudinal area is left on which the second laminate element is not fused. Because of the filler material, holes are formed into the resinous material, when stretched, as a result of the heat and pressure inside the package. When the holes formed in the resinous material form a continuous channel from the inside of the package to the space around the package, pressure and e.g. steam can be discharged from the package. A suitable filler material is any inorganic particles, e.g. calcium carbonate, clay and chalk. The average particle size of the inorganic particles is from 1 to 10 µm, preferably between 1 to 2 µm. A suitable amount of the inorganic filler in the breathable film is between 10 to 50 %, preferably 14 to 49%, of the whole film structure.

An ordinary lamination line can be used for lamination of the first and second layers of the first and second laminate elements used in the invention. In order to form the first laminate element, the second web is preferably narrower than the first web, or the second web is laminated so that a non-laminated part of the first layer, i.e. margin formed of the first layer of the first laminate element, is provided at one edge of the laminate. The width of the margin is preferably at least 5 mm. The webs may have been printed before lamination. Any suitable lamination method may be used, e.g. wet lamination or preferably dry lamination.

A package including a lap-seal structure according to the invention is used e.g. in a food package. A laminate including the lap-seal structure according to the invention can be used as packaging material as such or combined with other materials.

One preferable embodiment of a package including the lap-seal structure is formed the following way: a laminate is formed e.g in a common dry lamination production line. The material of the first layer of the laminate is e.g. polyethylene (PE) and of the second layer e.g. bi-axially oriented polypropylene (BOPP). The polypropylene could also be non-oriented. Along one edge of the laminate a non-laminated margin is provided to form a non-covered part of the laminate. The width of the margin is desirably at least 5 mm, preferably at least 20 mm or 30 mm. The formed laminate acts as both the first and second laminate element, as the lap-seal structure is formed by overlapping the opposite edges of the formed laminate to form a tube structure, the outer surface of the first layer being sealed onto the non-covered part of the laminate whereby the outer surface of the first layer forms the inner side of the tube, and lap sealing with heat the overlapping area, after which the ends of the tube are flattened together and heat-fused.

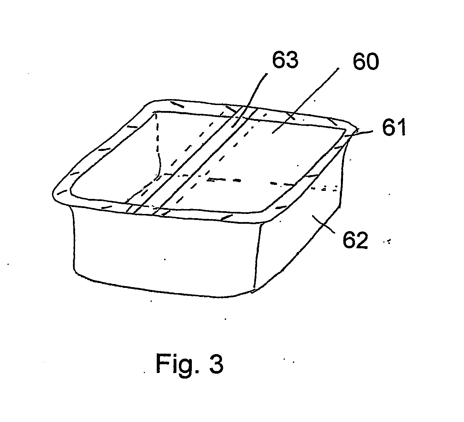

It is possible to provide a package comprising the lap-seal structure e.g. as shown in Figure 3. The lap-seal structure (60) is heat-sealed to the edges (61) of a container (62). This lap-seal structure allows discharge of pressure through a breathable film in the intermediate area (63).

### Examples

### Example 1

### Breathable film samples

Laminates were prepared with dry lamination method. Low density polyethylene (LDPE) film with calcium carbonate (CaCO₃) filler in different amounts and with two different particle sizes was used as the first layer and bi-axially oriented polypropylene (BOPP) was used as the second layer. A two-component lamination glue was used between the layers. The narrower BOPP film was laminated onto the LDPE film so that a non-laminated longitudinal margin area, the width of which was 20 mm, was left along one edge of the LDPE film. The opposite edge of the laminate (non-margin end) was cut even whereby the width of the laminate was 390 mm. The compositions of the laminates are shown in Table 1.

**Table 1.**

| | Breathable laminate | | | Film | CaCO3 filler amount * | CaCO3 filler Particle size /(µm) |
|---|---|---|---|---|---|---|
| Sample | 1st layer | Film thickness/(µm) | 2nd layer | thickness/(µm) | | |
| 1 | LDPE | 50 | BOPP | 20 | 4,2 | 2-10 |
| 2 | LDPE | 50 | BOPP | 20 | 6,3 | 2-10 |
| 3 | LDPE | 50 | BOPP | 20 | 28 | 1-2 |
| 4 | LDPE | 40 | BOPP | 20 | 49 | 1-2 |
| 5 | LDPE | 50 | BOPP | 20 | 14 | 2-10 |
| 6 | LDPE | 50 | BOPP | 20 | 28 | 2-10 |
| 7 | LDPE | 50 | BOPP | 20 | 42 | 2-10 |
| 8 | LDPE | 50 | BOPP | 20 | 14 | 1-2 |
| 9 | LDPE | 50 | BOPP | 20 | 28 | 1-2 |
| 10 | LDPE | 50 | BOPP | 20 | 42 | 1-2 |

| | | | | | | |
|---|---|---|---|---|---|---|
| *CaCO₃ filler amount of the 1 st layer structure (weight-%) | | | | | | |

The opposite ends of the laminate were overlapped to obtain a laminate in a tube form. The LDPE face of the non-margin end was overlapping the margin area of the laminate whereby the LDPE surfaces were against each other. The non-margin end was overlapping the margin about 3 mm. The overlapping area was sealed by fusing the overlapping surfaces together with heat. Between the heat-fused lap-seal and the laminated part of the laminate was thus left a longitudinal intermediate area, which consisted of the first layer, i.e. the LDPE film with CaCO₃ as a filler. The so formed heat-sealed tube comprising a lap-seal was cut in pieces of about 200 mm, were filled with an amount of frozen vegetables and the ends of the tube remaining open were flattened and heat-sealed together whereby fin-seals were formed. The intermediate area was approximately in the middle of one side of the package.

The formed packaged samples containing food were put in a microwave oven and heated. The side of the package where the intermediate area was located was directed upwards. The structure of the intermediate area was observed visually as the cooking in the microwave oven proceeded. The intermediate area of the samples 1 and 2 began to stretch as a result of the pressure and heat generated by the food contents of the package. The laminated part of the sample contained oriented PP and thus kept substantially its form. Finally, cracks were formed in the first layer in the intermediate area as a result of the pressure inside the package. Samples 3 to 10 responded differently to the pressure. As a result of the generation of the pressure and heat, the intermediate layer started to stretch. However, around or in close proximity of the filler particles small holes started to form to the film as the film stretched. As the amount of holes within the structure increased, channels formed of adjacent holes began to form. When such channels extended through the whole thickness of the first layer in the intermediate area, excessive pressure, which otherwise would have caused formation of splits or cracks in the intermediate area, was released from the package in a controlled way. In the samples 1 and 2 the amount of filler was not sufficient to allow channels to be formed to the intermediate area.

### Example 2

### Samples with heat sealable lacquer

Laminates were prepared with dry lamination method and the lamination was done as in example 1. In two samples non-oriented LDPE film was used as the first layer (samples 11 and 13) and in one sample (sample 12) polypropylene (PP). Bi-axially oriented polypropylene (BOPP) was used as the second layer of the laminate in all three samples. The narrower second layer (71) was laminated onto the first layer (70) so that a non-laminated longitudinal margin area of 20 mm width was left along one edge of the first layer, as in example 1. The opposite edge of the laminate (non-margin end) was cut even whereby the width of the laminate was 390 mm. The compositions of the laminates are shown in Table 1.

| Sample | 1st layer | Film thickness/(µm) | 2nd layer | Film thickness/(µm) |
|---|---|---|---|---|
| 11 | LDPE | 50 | BOPP | 20 |
| 12 | PP | 30 | BOPP | 30 |
| 13 | LDPE | 30 | BOPP | 30 |

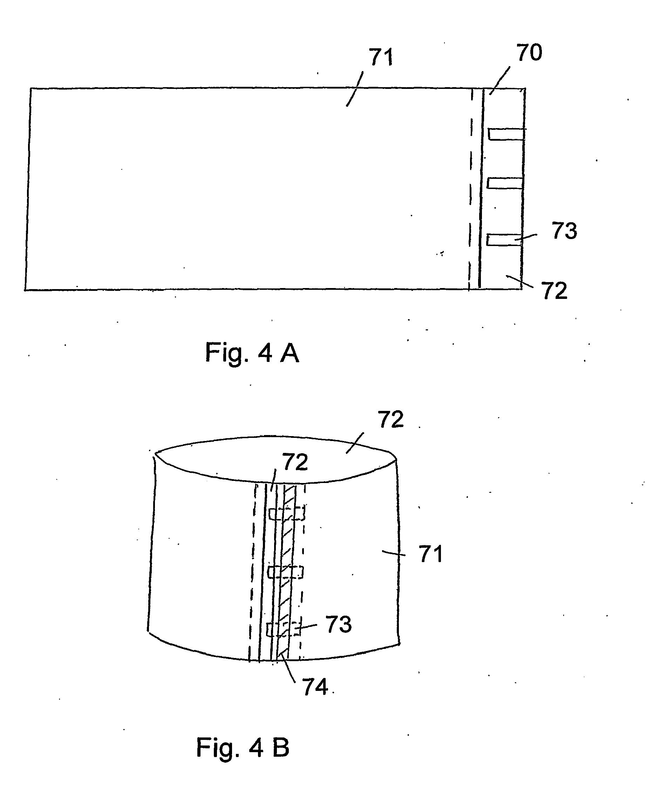

Before lamination of the first and the second layer together, heat sealable lacquer was applied at the printing machine on the margin area (72) of the first layer (70). The lacquer was applied at three substantially rectangular areas (73), starting from the peripheral edge of the margin and extending at transverse direction at the margin area. The size of the lacquer spots was 20 mm x 15 mm (width x length), with 47.5 mm distance from each other. This is shown schematically in Figure 4A.

The tubes were formed the same way as in Example 1, i.e. the first layer formed the inner side of the tube and the second layer and the intermediate area the outer side of the tube. The non-margin-end of the laminate overlapped the margin area at least a distance of 10 mm, thus it was overlapping also the lacquer spots, see Figure 4B. A longitudinal lap seal in the direction of the laminate edges was formed with heat to the overlapping area where the spots were located. The seal (74) must be located so that it does not extend to or beyond the lacquer spots at the sides of the longitudinal seal. Each laminate composition (i.e. sample number) was tested with two lacquers. The lacquers were such that they begin to soften at 50 to 120°C, preferably at 70 to 100 °C, and thus their adhesion force begins to decrease at that temperature range.

Packages containing food were made of the samples in the tube form as in Example 1 and the packages were heated in a microwave oven. As the temperature and pressure inside the package increased, the seam was observed visually. As the cooking proceeded, the lap-seal of all the tested samples began to open at the points where the lacquer was located as the adhesion force between the layers and the lacquer used was lower than the adhesion force between the heat-fused layers. Pressure generated inside the package could thus be discharged through holes formed to the seam.

## Claims

1. A lap-seal structure for joining laminate elements of resinous material, wherein the lap-seal structure comprises
a first laminate element (30) comprising a first layer (31) and a second layer (32) laminated thereon so that at one edge of the first laminate element (30), the second layer and the lamination (33) of the second layer extend to a distance from the edge of the first layer whereby a border area (50) of the first layer is formed in the direction of the edge,
a second laminate element (40) comprising a first layer (41) and a second layer (42) laminated thereon,
wherein the outer surface (44) of the first layer of the second laminate element is heat fusible with the inner surface (35) of the first layer (31) of the first laminate element,
the outer surface (44) of the first layer (41) of one end of the second laminate element (40) is overlapping the inner surface of the first layer of the first laminate element at the said border area (50) of the first laminate over a distance,
a bonded area (52) formed by heat-sealing the facing surfaces longitudinally at the overlapping area over a distance in the transverse direction to the longitudinal direction, to form a lap-seal, **characterized in that**
at the bonded area (52) heat sealable lacquer is applied over an area (73) along the longitudinal direction (L) of the bonded area (52) and the lacquer extends beyond the bonded area in the width direction (W).

2. A lap-seal structure according to claim 1 wherein the structure comprises an intermediate area (51) formed between the lamination of the first laminate element and the bonded area (52).

3. A pre-package in the form of a tube comprising a lap-seal structure according to any of the preceding claims in the longitudinal direction of the tube, wherein the lap-seal is formed of the opposite longitudinal sides of a continuous laminate.

4. A package comprising a lap-seal structure according to claim 1 or 2.

## Patentansprüche

1. Überlappende Abdichtstruktur zum Verbinden von Laminatelementen aus Harzmaterial, wobei die überlappende Abdichtstruktur aufweist:
ein erstes Laminatelement (30) mit einer ersten Schicht (31) und einer darauf laminierten zweiten Schicht (32), so dass an einer Kante des ersten Laminatelements (30) die zweite Schicht und die Laminierung (33) der zweiten Schicht sich bis in einen Abstand von der Kante der ersten Schicht erstrecken, wobei ein Grenzgebiet (50) der ersten Schicht in der Richtung der Kante gebildet wird,
ein zweites Laminatelement (40) mit einer ersten Schicht (41) und einer darauf laminierten zweiten Schicht (42),
wobei die Außenfläche (44) der ersten Schicht des zweiten Laminatelements mit der Innenfläche (35) der ersten Schicht des ersten Laminatelements wärmeverschmelzbar ist,
die Außenfläche (44) der ersten Schicht (41) an einem Ende des zweiten Laminatelements (40) mit der Innenfläche der ersten Schicht des ersten Laminatelements an dem Grenzgebiet (50) des ersten Laminats über eine Strecke hinweg überlappt,
ein Verbundgebiet (52), das durch Heißversiegeln der zugewandten Oberflächen in Längsrichtung auf dem überlappenden Gebiet über eine in der Querrichtung zur Längsrichtung verlaufende Strecke hinweg gebildet ist, um eine überlappende Abdichtung zu bilden,
**dadurch gekennzeichnet, dass** auf dem Verbundgebiet (52) heißversiegelbarer Lack über ein Gebiet (73) entlang der Längsrichtung (L) des Verbundgebietes (52) aufgetragen ist und der Lack sich in der Breitenrichtung (W) über das Verbundgebiet hinaus erstreckt.

2. Überlappende Abdichtstruktur nach Anspruch 1, welche ein zwischen der Laminierung des ersten Laminatelements und dem Verbundgebiet (52) ausgebildetes Zwischengebiet (51) aufweist.

3. Vorverpackung in Form eines Schlauchs mit einer überlappenden Abdichtstruktur nach einem der vorangehenden Ansprüche in der Längsrichtung des Schlauchs, wobei die überlappende Abdichtstruktur aus den gegenüberliegenden Längsseiten eines kontinuierlichen Laminats gebildet ist.

4. Verpackung mit einer überlappenden Abdichtstruktur nach Anspruch 1 oder 2.

## Revendications

1. Structure de joint à recouvrement destinée à assurer la jonction d'éléments laminés de matériau résineux, dans laquelle la structure de joint à recouvrement comprend :
un premier élément laminé (30) comprenant une première couche (31) et une seconde couche (32) laminée sur cette dernière de telle sorte que, sur un bord du premier élément laminé (30), la seconde couche et la partie de laminage (33) de la seconde couche s'étendent sur une certaine distance à partir du bord de la première couche de telle sorte qu'une zone de bordure (50) de la première couche est formée dans la direction du bord,
un second élément laminé (40) comprenant une première couche (41) et une seconde couche (42) laminée sur cette dernière,
dans laquelle la surface externe (44) de la première couche du second élément laminé peut être fondue à chaud avec la surface interne (35) de la première couche (31) du premier élément laminé,
la surface externe (44) de la première couche (41) d'une extrémité du second élément laminé (40) recouvre la surface interne de la première couche du premier élément laminé au niveau de ladite zone de bordure (50) du premier laminé sur une certaine distance,
une zone soudée (52) formée par scellement à chaud des surfaces en regard longitudinalement, au niveau de la zone de recouvrement sur une certaine distance dans la direction transversale, dans la direction longitudinale, afin de former un joint à recouvrement, **caractérisée en ce que**, au niveau de la zone soudée (52), une laque pouvant être scellée à chaud est appliquée sur une zone (73) suivant la direction longitudinale (L) de la zone soudée (52) et la laque s'étend au delà de la zone soudée dans la direction transversale (W).

2. Structure de joint à recouvrement selon la revendication 1, dans laquelle la structure comprend une zone intermédiaire (51) formée entre la partie de laminage du premier élément laminé et la zone soudée (52).

3. Pré-emballage sous la forme d'un tube comprenant une structure de joint à recouvrement selon l'une quelconque des revendications précédentes dans la direction longitudinale du tube, dans lequel le joint à recouvrement est formé sur les côtés longitudinaux opposés d'un laminé continu.

4. Emballage comprenant une structure de joint à recouvrement selon la revendication 1 ou 2.
